# EUROPEAN PATENT APPLICATION

(11) **EP 0 841 769 A2**
(43) Date of publication of application: **13.05.1998**
(21) Application number: 97500162.9
(22) Date of filing: 30.09.1997
(51) Int. Cl.: H04L 7/033

(54) **Integrated data synchronizer circuit between networks**

(30) Priority: 11.11.1996 ES 9602361
(71) Applicant: TELEFONICA DE ESPANA, S.A., 28013 Madrid (ES)
(72) Inventor: Mateos Borrego, Pedro, 28020 Madrid (ES); Pena Melian, Jesus, 28020 Madrid (ES); Conesa Lareo, José Luis, 28020 Madrid (ES)
(74) Representative: Sanchez del Campo Gonzalez de Ubierna, Ramon

(57) **Abstract**

An integrated data synchronizer circuit between networks, consisting of a timing generator (20) and two identical data synchronizers (21), (22), synchronizing two input links of remote data (9), (11), in respect to a local clock (15), generating two synchronized outputs (7), (8), and (3), (4), per each input data link, with the local clock, one with regard to the leading edge of said clock, and one with regard to the trailing edge, relying on thirteen filled pins constituting an integrated circuit of which five are input pins, four are output pins, two are feed pins, and the other two are ground pins.

## Description

### BACKGROUND OF THE INVENTION

The present specification relates to an application for a patent of invention referring to an integrated - data synchronizer circuit between networks, the evident purpose of which is to solve the lack of synchronization caused in the data distribution, in a synchronous way, between different functional (not closed) modules conforming a voice plus data Switching System.

### FIELD OF THE INVENTION

The present invention will find application in the - field of telecommunications and, specifically, in the field of the Switching Systems for telephone services.

### RELATED ART

One of the main needs existing in the voice plus data Switching Systems is that of being able of distibuting data between different functional modules composing the system.

In general, all the clocks existing in each of these modules are derived from one master, this being the reason for which the frequency is identical in all them.

When said modules, in spite of belonging to the same system, are separated into appreciable distances, and it is necessary that the distribution process is performed in a synchronous way, synchronization problems arise of synchronization between the data received and the local clock, since although the frequency is identical in all the clocks due to the own distribution process, differences of phase between said clocks are generated, this being the reason for which the distribution process is customarily performed in an asynchronous way.

The solution to this problem would be to relay, at - each of these modules, on a device synchronizing the - data received with the local clock signal.

At present, nothing is known about the existence in said voice plus data Switching Systems of a device of those characteristics allowing a synchronous way to be distributed, which would involve a greater speed in the transmission, and a smaller error rate.

### SUMMARY OF THE INVENTION

The integrated data synchronizer circuit between networks as proposed by the invention, constitutes per se an evident novelty in the application field, since it - solves, in an effective way, the mentioned anomalies, so obtaining a synchronous distribution, a greater speed in transmission, and a smaller rate of errors.

In a most definite way, the integrated data synchronizer circuit between networks of the invention, consists of a digital integrated circuit performing a synchronization function, in a synchronous way, of the information exchanged by different functional modules of a voice plus data Switching System, with redard to the local clock of each module.

It consists of two blocks: a timing generator and a data synchronizer.

The function of the timing generator is to generate, starting from the clock signals arriving at the circuit, the necessary control signals for the data synchronizer; exactly signals which are synchronized with the leading edge and the trailing edge of the local clock.

The data synchronizer scans and displeaces the remote data arriving at the circuit, filtering them and, later, synchronizing them in phase with both edges of the local clock.

The main functional units of the data synchronizer - block are as following, namely:
- Shift register, the function of which is to sample the input signal of remote data, obtaining shifted samples.
- State machine, the function of which is to analyse and filter the shifted samples.
- Multiplexer, the function of which is to take the samples designated by the state machine.
- Records,the function of which is to phase with both edges of the local clock the samples from the multiplexer.

### BRIEF DESCRIPTION OF THE DRAWINGS

In order to complement this description and aid to a better understanding of the characteristics of the invention, the appending drawings, which are a part of this specification, show, by way of illustrative and non limiting - example, the following figures:
Figure 1 shows a view of the contacts of the integrated data synchronizer circuit between networks of the invention, indicating the related signals.
Figure 2 shows a view of the block diagram of the integrated circuit as represented in Fig. 1 , and
Figure 3 shows, lastly, a view of the main functional units composing the invention.

### DETAILED DESCRIPTION OF THE INVENTION

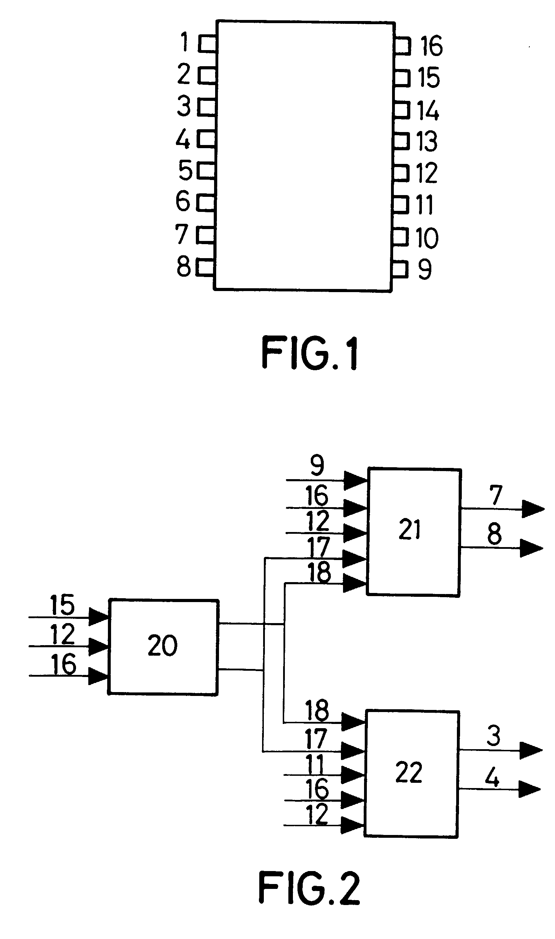

From these figures, it can be seen that the integrated data synchronizer circuit between networks envisaged, is constituted following exactly the figure 1 starting from a timing generator (20), and two identical - data synchronizers (21), (22), designed to operate in networks belonging to voice plus data Switching Systems distributing information, in a synchronous way, - between different functional modules belonging to said System, synchronizing two input links of remote data (9), (21), with regard to the local clock (15), generating two synchronized outputs (7), (8), and (3), (4), per each input data link, with the local clock, one in relation to the leading edge of said clock (7), (3), - and one in relation to the trailing edge (8) and (4).

According to Fig. 1, said integrated circuit is constituted by thirteen filled pin, of which five are input pins, four aure output pins, two are feed pins, - and the other two are ground pins.

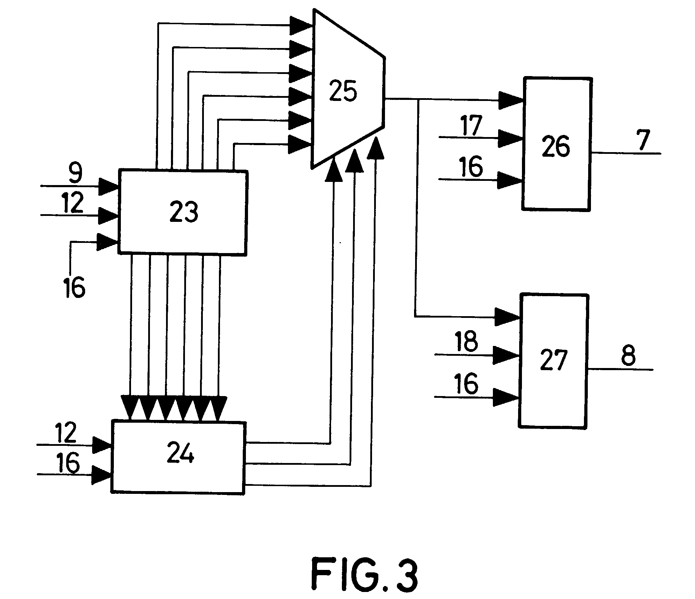

Specifically, the thirteen filled pins are as following, namely:
- CLK: pin 12, clock input of 8192 Khz, and 122 ns of cycles, with a tolerance of +/- 2ns, syncronous - with C2CLK, corresponds to the reference (12) in figures 2 and 3.
- C2CLK: pin 15, local clock input of 2048 Khz, and 488 ns of cycles, with a tolerance of +/- 20 ns, the - circuit synchronizes the data with regard to the leading and trailing edges of this clock, and it correspons to reference (15) in Fig, 2.
- RESET: pin 16, reset input or circuit set, and it corresponds to reference (16) in Figs. 2 and 3.
- IN1: pin 9, data input to the first synchronizer. The duration of each data is a C2CLK cycle, out of phase, with regard to this clock, and with a maximum crest to crest jitter of up to a CLK cycle, corresponding to reference (9) of Figs. 2 and 3.
- IN2: pin 11, data input to the second synchronizer. The duration of each data is a C2CLK cycle, out of phase with regard to this clock, and with a maximum crest to crest jitter of up to a CLK cycle, corresponding to reference (11) of Fig. 2.
- OUT1: pin 7, data output, which have been entered thru IN1, synchronized with regard to the leading edge of C2CLK, corresponds to reference (7) of Figs. 2 and 3.
- OUT1B: pin 8, data output, which have entered - thru IN1, synchronized with regard to the traling edge of C2CLK, and it corresponds to reference (8) in Figs. 2 and 3.
- OUT2: pin 3, data ouput, which ahve entered thru IN2, synchronized with regard to the leading edge of C2CLK, and it correesponds to reference (3) in Fig. 2.
- OUT2B: pin 4, data output which have entered thru IN2, synchronized with regard to the trailing edge of C2CLK, and it corresponds to reference 4 in Fig. 2.
- VDD: pins 13 and 14, feed voltage.
- GND: pins 5 and 6, circuit ground.

The remaining pins 1, 2 and 10 are not connected.

In Fig. 2, a block diagram of the integrated circuit is shown, which is constituted by a timing generator - (20), and two data synchronizers (21), (22).

The function of the timing generator (20) is to generate, starting from the reset inputs and the signals from the clock C2CLK (15) and CLK (12), the control - signals (17), (18), which are necessary for the data synchronizers (21) and (22). Exactly, these are signals allowing the phases in which the circuit is, to be distinguished.

The data synchronizers (21) and (22) have, as inputs, the control signals (17) and (28), the remote - data inputs IN1 (9) and IN2 (11), and that of reset (16), respectively.

The working procedure of each synchronizer is as follows: it samples and displaces the remote data arriving at circuit IN1 (9) and IN2 (11), it filter them and compare them with different clock phases present in the control signals (17) and (18), synchronizing them in - phase in respect to both local clock edges, so that the output data OUT1 (7), OUT1B (8), OUT2 (3) and OUT2B (4) are synchronized with regard to said edges.

According to Fig. 3, it can be seen therein the main functional units composing the data synchronizer, which are as follows: shift register (23), state machine (24), multiplexer (25) amd registers (26) and (27).

Thw shift register (23) samples the data input signal nine times in relation to the clock CLK, obtaining samples which are shifted 125 microseconds one to other.

The State Machine (24) analyses and filters the shifted samples, performing the control function of the Multiplexer (25), indicating it, every moment, the sampls it must take from the sifted samples entered.

The Multiplexer (25) takes the sample indicated by the State Machine (24), for being synchronized, in the following step, with regard to the leading and trailing edges of the local clock C2CLK (15).

The Registers (26) and (27) put in phase, with the local clock C2CLK (15), the samples from the Multiplexer (25).

At the Register output (26), there are the synchronized data OUT1 (7) in phase with regard to the leading edge of the local clock C2CLK, and at the Register output (27), the synchronized date OUT1B (8) in phase with regard the trailing edge of the local clock C2CLK.

It is not considered necessary to extend this description for any expert in the art to understand the scope of the invention and the advantages derived from it.

The material, shape, size and arrangement of its components will be open to variation, provided that it does not imply any alteration to the essence of the invention.

The terms under which this specification has been described should be always taken in an ample and non-limitative sense.

## Claims

1. An integrated data synchronizer circuit between networks, of those destined to be applied in voice plus data Switching Systems, performing a data distribution between functional modules, not closed, **characterized** in that it is constituted starting from several input data synchronizer blocks (21) and (22), so that, by taking samples of these data signals, the filtering and the comparison of these with the different phases of a local clock (15) obtain their synchronization with the leading edges (7) and (3), and with the trailing edges (8) and (4) of the clock (15), and a timing generator block generating the control signals necessary for the mentioned data synchronizers.

2. An integrated data synchronizer circuit between networks, according to claim 1, **characterized** in that each synchronization block is formed by a shift register (23), which samples and shifts the data input signal; a state machine (24) which analyses and filters the shifted samples; a multiplexer (25), which takes the samples indicated by the state machine (24), and a series of registers (26) and (27), putting in phase, with both edges of the local clock (15), the samples from the above mentioned multiplexer (25).
